# FASCICULE DE BREVET EUROPEEN

(11) **EP 2 961 631 B1**
(45) Date de publication et mention de la délivrance du brevet: **22.03.2017**
(21) Numéro de dépôt: 13785444.4
(22) Date de dépôt: 30.10.2013
(51) Int. Cl.: B60N 2/60

(54) **ELEMENT DE SIEGE D'AUTOMOBILE, SIEGE EQUIPE D'UN TEL ELEMENT, VEHICULE EQUIPE D'UN TEL SIEGE ET PROCEDE D'ASSEMBLAGE D'UN TEL ELEMENT**
KRAFTFAHRZEUGSITZELEMENT, SITZ MIT SOLCH EINEM ELEMENT, FAHRZEUG MIT SOLCH EINEM SITZ UND VERFAHREN ZUR MONTAGE SOLCH EINES ELEMENTS
MOTOR VEHICLE SEAT ELEMENT, SEAT EQUIPPED WITH SUCH AN ELEMENT, VEHICLE EQUIPPED WITH SUCH A SEAT AND METHOD FOR ASSEMBLING SUCH AN ELEMENT

(30) Priorité: 27.02.2013 FR 1351711
(43) Date de publication de la demande: 06.01.2016
(73) Titulaire: Renault S.A.S., 92100 Boulogne-Billancourt (FR)
(72) Inventeur: PEREZ, Jean Claude, F-78450 Villepreux (FR)
(86) Numéro de dépôt international: PCT/EP2013/072684
(87) Numéro de publication internationale: WO 2014/131473

(56) Documents cités:
- FR-A1- 2 298 988

## Description

La présente invention concerne un élément de siège automobile, un siège équipé d'un tel élément, ainsi qu'un véhicule équipé d'un tel siège et un procédé d'assemblage d'un tel élement. En particulier, elle concerne un élément qui peut être un dossier ou une assise de siège employé notamment dans le cadre des sièges déhoussables.

Classiquement, un siège de voiture comporte une armature, une matelassure généralement en mousse, et un revêtement d'aspect recouvrant la matelassure généralement appelé coiffe. Ce revêtement peut être réalisé en différents matériaux d'aspect par exemple tissu, cuir etc. La coiffe est habituellement fixée sur la matelassure et sur la structure grâce à des moyens de rappels et de fixation, de manière connue en soi.

La coiffe est susceptible de se salir, voire d'être abimée ou usée localement lors de l'utilisation des sièges. On connait notamment de FR2298988 des coiffes présentant une partie amovible reliée à une partie latérale au moyen d'une fermeture à glissière. La partie amovible se désolidarise de la partie latérale par actionnement du curseur de la fermeture à glissière.

Or, il arrive, lorsque l'on souhaite enlever la partie amovible de la coiffe, que la partie latérale se désolidarise elle aussi du siège. Ceci est souvent dû aux moyens de fixation de la coiffe à l'armature qui non retenus, se désengagent alors et laissent s'échapper la coiffe. Il faut alors regarnir entièrement le siège, pas seulement la coiffe amovible, mais aussi la coiffe fixe ce qui nécessite l'intervention d'un professionnel et ce que l'on souhaitait éviter au départ, par l'utilisation d'une coiffe amovible.

D'autres solutions ont été imaginées pour résoudre ce problème comme l'emploi de sous coiffe sur lesquelles on a fixé un élément de la fermeture à glissière, la sous coiffe maintenant la coiffe latérale. Or, ces solutions sont coûteuses, notamment par l'ajout de sous coiffe. De plus, elles peuvent nuire à l'esthétique de l'ensemble du siège, notamment aux marquages des rappels en partie de coiffe amovible par l'ajout d'une épaisseur supplémentaire entre la coiffe externe et la matelassure, épaisseur défavorable aux marquages des rappels de coiffe.

La présente invention apporte une solution aux problèmes susmentionnés en proposant une fixation ingénieuse de la coiffe latérale à la matelassure.

Ainsi, l'invention propose un élément de siège d'automobile comprenant
- une matelassure munie d'une face d'appui et de faces latérales, la matelassure étant destinée à être placée sur une structure de l'élément de siège,
- une coiffe recouvrant la matelassure, la coiffe étant constituée de deux parties de coiffe : une coiffe latérale fixe recouvrant les faces latérales de matelassure et une coiffe centrale amovible, les deux parties de coiffes étant réunies par une fermeture à glissière,
caractérisé en ce que la coiffe latérale fixe est munie d'une pluralité de dispositifs d'ancrage à la matelassure placés longitudinalement à la fermeture à glissière et en ce que la matelassure comprend une pluralité de fentes traversantes disposées en regard sur les faces latérales de la matelassure, une fente traversante permettant le passage traversant la matelassure d'un dispositif d'ancrage de la coiffe latérale en regard de la fente, dans le but de fixer la coiffe latérale à la matelassure au voisinage de la fermeture à glissière.

Avantageusement, cette fixation permet, d'une façon simple, d'assurer un maintien tout à fait satisfaisant de la coiffe latérale sur la matelassure. Une sous coiffe pour tenir la coiffe latérale n'est ainsi plus nécessaire, ce qui procure un avantage économique et ce qui permet de s'affranchir de mises au point spécifiques nécessitées par l'emploi de sous coiffe.

Dans des formes de réalisation préférées de l'invention, on a en outre recours à l'une et/ou à l'autre des dispositions suivantes prises seules ou en combinaison:
- Le dispositif d'ancrage à la matelassure de la coiffe latérale comprend un profilé plat relié à la coiffe latérale par une pièce intermédiaire.
- Le profilé plat est relié à la pièce intermédiaire par couture.
- Le profilé plat est en plastique.
- le profilé plat comprend deux longueurs parallèles
- Le profilé plat est fixé à la pièce intermédiaire sensiblement depuis un axe médian des deux longueurs du profilé plat.
- Le profilé plat est pivotant autour de l'axe médian, afin de permettre le basculement du profilé plat lors de la fixation de celui-ci à la matelassure.
- La face latérale de matelassure munie de cinq fentes traversantes.

L'invention concerne aussi une assise et/ou un dossier de siège, un siège et un véhicule selon l'une quelconque des caractéristiques précédentes.

L'invention concerne aussi un procédé d'assemblage d'un élément de siège d'automobile comprenant les étapes suivantes :
- Fourniture d'une matelassure d'un élément de siège comprenant des fentes traversantes et d'une coiffe constituée d' une coiffe centrale et d' une coiffe latérale munie d'une pluralité de dispositifs d'ancrage disposés longitudinalement à une fermeture à glissière reliant les deux coiffes, les dispositifs d'ancrage comprenant un profilé plat pivotant.
- Insertion d'au moins un dispositif d'ancrage de la coiffe latérale à l'intérieur de la fente traversante de la mousse, située en regard du dispositif d'ancrage,
- une fois traversé la matelassure, pivotement du profilé plat afin de placer celui-ci en position de retenue

D'autres caractéristiques et avantages de l'invention apparaîtront au cours de la description suivante de plusieurs de ses formes de réalisation, données à titre d'exemples non limitatifs, en regard des dessins joints. Sur les dessins :
La figure 1 représente une vue en perspective d'un siège muni d'une assise de siège selon l'invention
La figure 2 représente une vue agrandie d'une assise de siège selon l'invention avant fixation de l'élément d'ancrage
La figure 3 représente une vue agrandie d'une assise de siège selon l'invention après fixation de l'élément d'ancrage.

Dans le contexte de la présente demande, les termes « avant », « arrière », « gauche », « droite » s'entendent en référence à un repère usuel des véhicules automobiles comprenant un premier axe longitudinal X, horizontal et orienté de l'arrière vers l'avant, un axe transversal Y et un axe vertical Z dirigé du bas vers le haut, avec un siège disposé dans le véhicule, le dossier du siège étant en position d'utilisation.

Par ailleurs, sur les différentes figures, les mêmes références désignent des éléments identiques ou similaires.

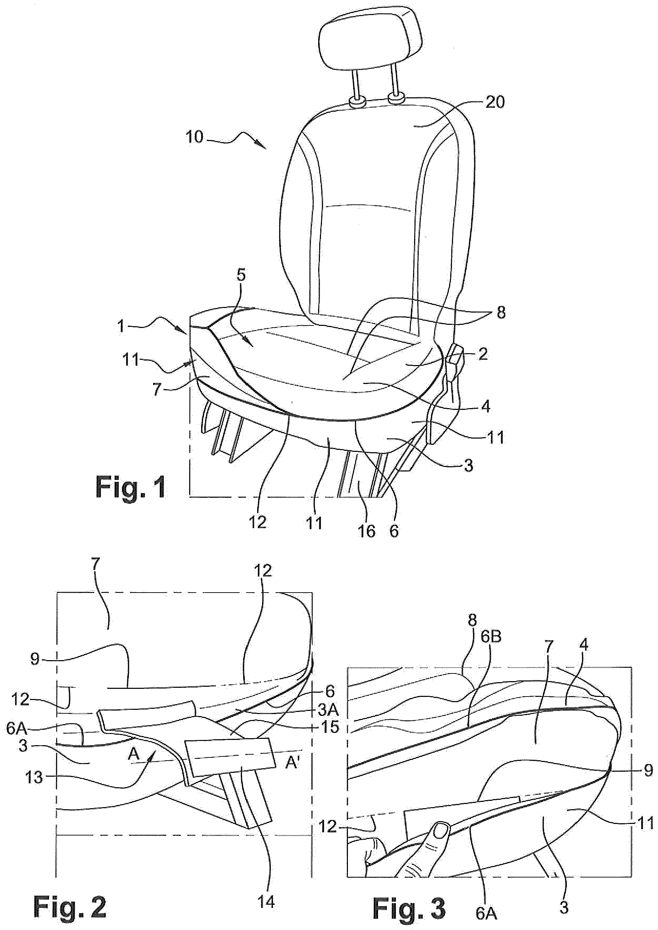

La figure 1 est une vue en perspective d'un siège muni d'une assise selon l'invention. L'assise 1 comprend une coiffe 2 en deux parties, une partie latérale fixe 3 et une partie amovible 4 sensiblement centrale, recouvrant le médaillon 5 de l'élément 1 de siège.

Les deux parties de coiffe 2 sont réunies par une fermeture à glissière 6 qui est disposée latéralement sur l'élément de siège, en particulier sur les faces latérales 11 de l'élément de siège. Les faces latérales 11 s'étendent sensiblement suivant Z. Chaque élément de coiffe comprend un bord opposé 6A, 6B de la fermeture à glissière. Comme on le voit sur la figure 1, la coiffe amovible 4 recouvre le médaillon, constitué par la partie centrale de la face d'appui, et recouvre aussi une partie supérieure des faces latérales d'assise, encadrant ainsi le médaillon de l'élément de siège, ici l'assise. La partie amovible de coiffe est délimitée sur les faces latérales par la fermeture à glissière 6. En partie arrière de l'élément de siège, notamment à l'endroit du contact entre l'élément d'assise et l'élément de dossier, la coiffe est fixée à l'armature, au moyen par exemple d'un profilé de garnissage (non montré ici).

La partie amovible de coiffe 4 est directement positionnée sur la matelassure 7, sans sous coiffe, permettant ainsi à la coiffe amovible de marquer sans épaisseur intermédiaire, les rappels de garnissage 8 en surface de matelassure 7 pour un effet esthétique plus prononcé. Les rappels de garnissage 8 sont par exemple réalisés par des éléments auto-agrippant surmoulés dans la matelassure (non représenté) qui s'associent avec des boucles portées par la coiffe amovible. Cette fixation par auto-agrippant permet une désolidarisation ultérieure simplifiée de la coiffe amovible 4, au moyen par exemple d'une simple traction exercée sur la coiffe amovible 4.

La figure 2 montre les aménagements réalisés dans la matelassure 7 afin de permettre son utilisation pour le garnissage de la partie de coiffe latérale fixe 3.

Des évidements 9 en forme de fente s'étirant longitudinalement le long de la ligne de séparation 12 entre les deux coiffes sont réalisés à l'intérieur de la matelassure. La ligne de séparation entre les deux coiffes est matérialisée par l'emplacement de la fermeture à glissière. Les évidements 9 sont traversants pour permettre le passage des dispositifs d'ancrage placés sur la coiffe latérale fixe 3. Comme on le voit sur la figure 2, la partie de coiffe latérale fixe 3 comprend sur son extrémité en contact avec la partie de coiffe amovible 4, le long du bord de la fermeture à glissière, des dispositifs d'ancrage 13 à la matelassure 7 disposés longitudinalement à la fermeture de glissière et répartis le long du bord 6A. Dans notre exemple, cinq dispositifs d'ancrage 13 sont répartis le long du bord 6A de fermeture. De manière préférentielle, ceux-ci sont répartis de façon équidistante l'un à l'autre. De même, dans notre exemple, la matelassure 7 comprend en regard cinq ouvertures en forme de fentes traversantes 9 qui s'étendent le long de la ligne de séparation entre les deux coiffes. Chaque dispositif d'ancrage comprend un profilé plat 14, sensiblement rectangulaire, relié à la coiffe latérale 3 par une pièce intermédiaire 15.

Le profilé plat 14 comprend deux longueurs parallèles. Il est fixé à la pièce intermédiaire 15 sensiblement depuis un axe AA' médian des deux longueurs. Le profilé plat 14 est pivotant autour de l'axe médian AA', afin de permettre le basculement du profilé 14 lors de la fixation de celui-ci à la matelassure 7, ainsi qu'il sera décrit par la suite. Le profilé plat 14 est sensiblement réalisé en matière plastique et celui-ci est relié à la pièce intermédiaire 15 par couture. La couture est réalisée suivant l'axe de pivotement AA'. Le profilé est de faible épaisseur, de préférence de 2 à 6 mm, permettant à la fois sa couture sur la pièce intermédiaire, et aussi son engagement à l'intérieur de la fente traversante 9. La pièce intermédiaire 15 est elle-même reliée à la coiffe fixe latérale 3, sur la surface en contact avec la mousse 3A, par couture.

La figure 3 montre la coiffe latérale fixe 3 lorsque celle-ci est fixée et le dispositif d'ancrage à la matelassure 13 en position de fixation, c'est-à-dire inséré au travers de la matelassure 7. On retire la coiffe amovible 4 par désengagement de la coiffe amovible réalisée par le déplacement du curseur de la fermeture à glissière 6. Le siège présente alors sa face supérieure de matelassure 7 nue, comme on le voit sur la figure 3. Le détachement total de la coiffe amovible 4 est réalisé ensuite par désolidarisation des rappels fixés par exemple par auto-aggripant et par désengagement du profilé arrière placé dans l'espace entre l'assise et le dossier. Lors du détachement de la coiffe amovible 4, la coiffe fixe latérale 3 reste en position grâce au maintien réalisé par les dispositifs d'ancrage 13 engagés dans la matelassure.

L'assemblage de l'élément de siège, en particulier la fixation initiale de la coiffe 2 sur la matelassure se réalise de la façon suivante : Après une première étape de fourniture d'une matelassure 7 d'un élément de siège 1 comprenant des fentes traversantes 9 et d'une coiffe 2 constituée d' une coiffe centrale amovible 4 et d' une coiffe latérale fixe 3 munie d'une pluralité de dispositifs d'ancrage 13 disposés longitudinalement à une fermeture à glissière 6 reliant les deux parties de coiffes. Il y a insertion successive de chaque dispositif d'ancrage 13 de la coiffe latérale fixe 3 à l'intérieur de la fente traversante 9 de la matelassure 7, située en regard du dispositif d'ancrage 13. L'insertion est réalisée suivant le sens de l'épaisseur du profilé, et de préférence, en présentant sa longueur en regard de la fente. Après avoir traversé la fente 9 et lorsque le profilé 14 est situé dans l'espace entre la matelassure et la structure de l'élément de siège, le profilé 14 pivote suivant son axe AA' pour offrir sa face rectangulaire d'une largeur plus grande que la largeur de la fente 9 face à la fente et être ainsi retenu sur la face de la matelassure en contact avec l'armature. Le profilé est ainsi en position de retenue. De manière préférentielle, le profilé a une longueur d'environ 30 à 80 mm et une largeur d'environ 10 à 30 mm. La fente a pour longueur 40 à 90 mm et largeur 1 à 5 mm environ.

La figure 3 montre le dispositif d'ancrage 13 en position de retenue. Dans cette position, la pièce intermédiaire 15 est visible en sortie de fente. La pièce intermédiaire peut être réalisée en matériau élastique.

Grâce à cette fixation de l'élément d'ancrage 13, la coiffe latérale fixe 3 est maintenue fermement en position. Celle-ci reste notamment en position lorsque l'on désengage la fermeture afin de retirer la coiffe amovible.

L'invention n'est nullement limitée à une assise de siège, mais peut aussi concerner un dossier de siège. Elle propose un moyen simple de fixer la partie fixe latérale d'une coiffe amovible afin de permettre un désengagement facile de la partie amovible, tout en nécessitant un équipement minimum pour le siège.

## Revendications

1. Elément de siège d'automobile (1, 20) comprenant
- une matelassure (7) munie d'une face d'appui et de faces latérales, la matelassure (7) étant destinée à être placée sur une structure de l'élément de siège,
- une coiffe (2) recouvrant la matelassure (7), la coiffe (2) étant constituée de deux parties de coiffe : une coiffe latérale fixe (3) recouvrant les faces latérales de matelassure et une coiffe centrale amovible (4), les deux parties de coiffes étant réunies par une fermeture à glissière (6),
**caractérisé en ce que** la coiffe latérale fixe (3) est munie d'une pluralité de dispositifs d'ancrage (13) à la matelassure (7) placés longitudinalement à la fermeture à glissière (6) et **en ce que** la matelassure (7) comprend une pluralité de fentes traversantes (9) disposées en regard sur les faces latérales de la matelassure (7), une fente traversante (9) permettant le passage traversant la matelassure (7) d'un dispositif d'ancrage de la coiffe latérale (13) en regard de la fente, dans le but de fixer la coiffe latérale (3) à la matelassure (7) au voisinage de la fermeture à glissière (6).

2. Elément de siège (1, 20) selon la revendication précédente **caractérisé en ce que** le dispositif d'ancrage à la matelassure de la coiffe latérale (13) comprend un profilé plat (14) relié à la coiffe latérale (3) par une pièce intermédiaire (15).

3. Elément de siège (1, 20) selon la revendication 2 **caractérisé en ce que** le profilé plat (14) est relié à la pièce intermédiaire (15) par couture.

4. Elément de siège (1, 20) selon les revendications 2 ou 3 **caractérisé en ce que** le profilé plat (14) est en plastique.

5. Elément de siège (1, 20) selon les revendications 2 à 4 **caractérisé en ce que** le profilé plat (14) comprend deux longueurs parallèles.

6. Elément de siège (1, 20) selon la revendication 5 **caractérisé en ce que** le profilé plat (14) est fixé à la pièce intermédiaire (15) sensiblement depuis un axe médian (AA') des deux longueurs du profilé plat (14).

7. Elément de siège (1, 20) selon la revendication 6 **caractérisé en ce que** le profilé plat (14) est pivotant autour de l'axe médian (AA'), afin de permettre le basculement du profilé plat (14) lors de la fixation de celui-ci à la matelassure (7).

8. Elément de siège (1, 20) d'automobile selon l'une quelconque des revendications précédentes **caractérisé en ce qu'**il comprend une face latérale de matelassure munie de cinq fentes traversantes (9).

9. Assise (1) de siège automobile selon l'une quelconque des revendications précédentes.

10. Siège (10) comprenant une assise (1) et/ou un dossier (20) de siège automobile selon l'une quelconque des revendications 1 à 8.

11. Véhicule comprenant un siège selon la revendication 10

12. Procédé d'assemblage d'un élément de siège d'automobile (1, 20) comprenant les étapes suivantes :
- Fourniture d'une matelassure (7) d'un élément de siège (1, 20) comprenant des fentes traversantes (9) et d'une coiffe (2) d'un élément de siège constituée d'une coiffe centrale amovible (4) et d'une coiffe latérale fixe (3) munie d'une pluralité de dispositifs d'ancrage (13) disposés longitudinalement à une fermeture à glissière (6) reliant les deux parties de coiffes, les dispositifs d'ancrage (13) comprenant un profilé plat pivotant (14).
- Insertion d'au moins un dispositif d'ancrage (13) de la coiffe latérale fixe (3) à l'intérieur de la fente traversante (9) de la matelassure (7), située en regard du dispositif d'ancrage (13),
- une fois traversé la matelassure, pivotement du profilé plat (14) afin de placer celui-ci en position de retenue.

## Patentansprüche

1. Kraftfahrzeugsitzelement (1, 20), das enthält
- eine Polsterung (7), die mit einer Auflageseite und mit Seitenflächen versehen ist, wobei die Polsterung (7) dazu bestimmt ist, auf einem Aufbau des Sitzelements angeordnet zu werden,
- einen Bezug (2), der die Polsterung (7) bedeckt, wobei der Bezug (2) aus zwei Bezugsteilen besteht: einen ortsfesten seitlichen Bezug (3), der die Seitenflächen der Polsterung bedeckt, und einen entfernbaren mittleren Bezug (4), wobei die zwei Bezugsteile durch einen Reißverschluss (6) miteinander verbunden sind,
**dadurch gekennzeichnet, dass** der ortsfeste seitliche Bezug (3) mit einer Vielzahl von Verankerungsvorrichtungen (13) an der Polsterung (7) versehen ist, die in Längsrichtung am Reißverschluss (6) angeordnet sind, und dass die Polsterung (7) eine Vielzahl von durchgehenden Schlitzen (9) enthält, die gegenüber auf den Seitenflächen der Polsterung (7) angeordnet sind, wobei ein durchgehender Schlitz (9) den die Polsterung (7) durchquerenden Durchgang einer Verankerungsvorrichtung des seitlichen Bezugs (13) gegenüber dem Schlitz erlaubt, mit dem Ziel, den seitlichen Bezug (3) in der Nähe des Reißverschlusses (6) an der Polsterung (7) zu befestigen.

2. Sitzelement (1, 20) nach dem vorhergehenden Anspruch, **dadurch gekennzeichnet, dass** die Verankerungsvorrichtung des seitlichen Bezugs (13) an der Polsterung ein flaches Profilteil (14) enthält, das mit dem seitlichen Bezug (3) durch ein Zwischenbauteil (15) verbunden ist.

3. Sitzelement (1, 20) nach Anspruch 2, **dadurch gekennzeichnet, dass** das flache Profilteil (14) mit dem Zwischenbauteil (15) durch Nähen verbunden wird.

4. Sitzelement (1, 20) nach den Ansprüchen 2 oder 3, **dadurch gekennzeichnet, dass** das flache Profilteil (14) aus Kunststoff ist.

5. Sitzelement (1, 20) nach den Ansprüchen 2 bis 4, **dadurch gekennzeichnet, dass** das flache Profilteil (14) zwei parallele Längen enthält.

6. Sitzelement (1, 20) nach Anspruch 5, **dadurch gekennzeichnet, dass** das flache Profilteil (14) am Zwischenbauteil (15) im Wesentlichen ausgehend von einer Mittelachse (AA') der zwei Längen des flachen Profilteils (14) befestigt ist.

7. Sitzelement (1, 20) nach Anspruch 6, **dadurch gekennzeichnet, dass** das flache Profilteil (14) um die Mittelachse (AA') schwenkbar ist, um das Kippen des flachen Profilteils (14) bei dessen Befestigung an der Polsterung (7) zu erlauben.

8. Kraftfahrzeugsitzelement (1, 20) nach einem der vorhergehenden Ansprüche, **dadurch gekennzeichnet, dass** es eine Seitenfläche der Polsterung enthält, die mit fünf durchgehenden Schlitzen (9) versehen ist.

9. Sitzfläche (1) eines Kraftfahrzeugsitzes nach einem der vorhergehenden Ansprüche.

10. Sitz (10), der eine Sitzfläche (1) und/oder eine Rückenlehne (20) eines Kraftfahrzeugsitzes nach einem der Ansprüche 1 bis 8 enthält.

11. Fahrzeug, das einen Sitz nach Anspruch 10 enthält.

12. Verfahren zum Zusammenbau eines Kraftfahrzeugsitzelements (1, 20), das die folgenden Schritte enthält:
- Bereitstellen einer Polsterung (7) eines Sitzelements (1, 20), die durchgehende Schlitze (9) enthält, und eines Bezugs (2) eines Sitzelements, der aus einem entfernbaren mittleren Bezug (4) und aus einem ortsfesten seitlichen Bezug (3) besteht, der mit einer Vielzahl von Verankerungsvorrichtungen (13) versehen ist, die in Längsrichtung an einem Reißverschluss (6) angeordnet sind, der die zwei Bezugsteile verbindet, wobei die Verankerungsvorrichtungen (13) ein schwenkbares flaches Profilteil (14) enthalten,
- Einfügen mindestens einer Verankerungsvorrichtung (13) des ortsfesten seitlichen Bezugs (3) ins Innere des durchgehenden Schlitzes (9) der Polsterung (7), der sich gegenüber der Verankerungsvorrichtung (13) befindet,
- wenn es die Polsterung durchquert hat, Schwenken des flachen Profilteils (14), um dieses in Haltstellung zu positionieren.

## Claims

1. Motor vehicle seat element (1, 20) comprising
- a padding (7) provided with a bearing face and lateral faces, the padding (7) being intended to be placed on a structure of the seat element,
- a cover (2) covering the padding (7), the cover (2) consisting of two cover parts: a fixed lateral cover (3) covering the lateral padding faces and a removable central cover (4), the two cover parts being joined by a slide fastener (6), **characterized in that** the fixed lateral cover (3) is provided with a plurality of devices (13) for anchoring to the padding (7) placed longitudinally to the slide fastening (6) and **in that** the padding (7) comprises a plurality of through slots (9) arranged opposite on the lateral faces of the padding (7), a through slot (9) allowing the passage through the padding (7) of an anchoring device for the lateral cover (13) facing the slot, in order to fix the lateral cover (3) to the padding (7) in the vicinity of the slide fastening (6).

2. Seat element (1, 20) according to the preceding claim, **characterized in that** the padding anchoring device of the lateral cover (13) comprises a flat profile section (14) linked to the lateral cover (3) by an intermediate piece (15).

3. Seat element (1, 20) according to Claim 2, **characterized in that** the flat profile section (14) is linked to the intermediate piece (15) by stitching.

4. Seat element (1, 20) according to Claims 2 or 3, **characterized in that** the flat profile section (14) is made of plastic.

5. Seat element (1, 20) according to Claims 2 to 4, **characterized in that** the flat profile section (14) comprises two parallel lengths.

6. Seat element (1, 20) according to Claim 5, **characterized in that** the flat profile section (14) is fixed to the intermediate piece (15) substantially from a median axis (AA') of the two lengths of the flat profile section (14).

7. Seat element (1, 20) according to Claim 6, **characterized in that** the flat profile section (14) pivots about the median axis (AA'), in order to allow the tilting of the flat profile section (14) when fixing the latter to the padding (7).

8. Motor vehicle seat element (1, 20) according to any one of the preceding claims, **characterized in that** it comprises a lateral padding face provided with five through slots (9).

9. Motor vehicle seat base (1) according to any one of the preceding claims.

10. Seat (10) comprising a motor vehicle seat base (1) and/or a motor vehicle seat back (20) according to any one of Claims 1 to 8.

11. Vehicle comprising a seat according to Claim 10.

12. Method for assembling a motor vehicle seat element (1, 20) comprising the following steps:
- supplying a padding (7) of a seat element (1, 20) comprising through slots (9) and a cover (2) of a seat element consisting of a removable central cover (4) and a fixed lateral cover (3) provided with a plurality of anchoring devices (13) arranged longitudinally to a slide fastener (6) linking the two cover parts, the anchoring devices (13) comprising a pivoting flat profile section (14),
- inserting at least one anchoring device (13) of the fixed lateral cover (3) into the through slot (9) of the padding (7), situated facing the anchoring device (13),
- having passed through the padding, pivoting the flat profile section (14) in order to place the latter in a retaining position.
